# EUROPEAN PATENT APPLICATION

(11) **EP 3 415 262 A1**
(43) Date of publication of application: **19.12.2018**
(21) Application number: 17732282.3
(22) Date of filing: 17.05.2017
(51) Int. Cl.: B23K 11/24, B23K 11/11

(54) **DIRECT CONTACT- AND ALTERNATING CURRENT TRAPEZOIDAL WAVE-BASED ELECTRIC RESISTANCE WELDING PROCESS METHOD OF ALUMINUM**

(30) Priority: 20.04.2017 CN 201702598850
(71) Applicant: Tianjin Sunke Digital Control Technology Co., Ltd, Teda Yat-sen Scientificin Industrial Park Tianjin 301726 (CN)
(72) Inventor: NIE, Lanmin, Tianjin 301726 (CN); ZHAO, Jihua, Tianjin 301726 (CN)
(74) Representative: Dargiewicz, Joanna
(86) International application number: PCT/CN2017/084619
(87) International publication number: WO 2018/192038

(57) **Abstract**

The present invention relates to a direct-contact type alternating current (AC) trapezoidal wave aluminum resistance welding process method. AC trapezoidal wave inverter controller capable of controlling a positive and negative half-wave current rising rate, and an AC transformer (no rectifier or silicon-controlled rectifier on a secondary coil of the transformer) with an output voltage of 10-30V, a peak current of 32-70kiloampere and a frequency of 25-80Hz are included. The inverter controller and the AC transformer are connected by means of a conductor, a welding electrode, a pressurization mechanism and a cooling system to form resistance welding equipment to enable the equipment to output positive and negative alternating trapezoidal wave current on two sides of the electrode when a workpiece is pressurized and welded and to perform welding according to a specified duty ratio, welding current, frequencies, welding cycle number and welding pressure. Practice proves that the method has the advantages that 50-150 welding spots can be welded while grinding the electrode once each time, service life of the electrode is prolonged by 2-5 times, production efficiency and welding quality are greatly improved, and production cost is reduced, thereby realizing a qualitative leap in aluminum and aluminum alloy resistance welding processes.

## Description

### TECHNICAL FIELD

The present invention belongs to the technical field of welding, relates to resistance welding-related technologies, and particularly relates to a direct-contact type AC trapezoidal wave aluminum resistance welding process method.

### BACKGROUND

It is known that most of resistance welding processes and equipment are developed, researched and applied with respect to carbon steel, stainless steel, high-temperature alloys, silver and copper. An aluminum and aluminum alloy welding process is only limited to the research on influences of pressure, electrode shapes, additional tools, multi-pulse-pair welding quality, electrode life and production efficiency in a direct current power supply range. Too much attention and researches are absent in aluminum welding by using an AC power supply.

A direct-current resistance welding power supply is adopted in a traditional automotive aluminum body resistance welding process, and only 10-20 welding spots can be welded after an electrode is ground each time. When concentric electrode or other direct contact type direct current welding is adopted, (the electrode is directly contacted with a workpiece), the equipment stops working after more than 30 welding spots are welded at most, and the electrode is ground again, so production efficiency is reduced, service life of the electrode is shortened, and cost is increased. Particularly due to a phenomenon that nugget sizes in each layer have great differences while three layers or more layers of welded sheets are welded, the welding quality is difficult to be guaranteed. The reason is that a polar effect exists during direct current welding, that is, when current flows from a positive electrode to a negative electrode, contact between electrodes on two sides and the workpiece is directional, and a potential difference generated by contact is a vector, i.e. a potential difference of copper-aluminum contact is different from a potential difference of aluminum-copper contact under an effect of an electric field. A difference between the two potential differences is tested to be about 25%, that is, a copper-aluminum contact voltage on a positive electrode side is higher than an aluminum-copper contact voltage on a negative electrode side during welding, and according to a formula Q=0.24•I•U•t, permeability of aluminum electrodes on two sides diffusing to the copper electrode is different because a heat difference on the two sides is also about 25% due to the same conduction time t of current I. A root cause is that a temperature field in a welding zone is changed because copper-aluminum contact electric resistance heat on the positive electrode side is higher than aluminum-copper contact electric resistance heat on the negative electrode side, so that the copper electrode on the positive electrode side is easily bonded with the aluminum electrode, thereby influencing welding efficiency of resistance spot welding, electrode life and welding quality.

The applicant company as a specialized company of resistance welding researches and develops three welding patent technologies as follows:
1. A pulse width adjustable type AC/DC inverter resistance welding process method (CN103008865A) includes the following implementation steps: installing a welding transformer in a body, connecting a primary coil of a transformer with output ends U and V of a controller, fixing a secondary coil on a pressurization mechanism through a copper conductor and a welding electrode for compressing a welding workpiece; outputting low voltage and high welding current by adopting a pulse width adjustable type welding transformer, and controlling a welding waveform by using a pulse width adjustable type inverter controller; deriving a formula of pulse width T/2=1000/2•f=2.22•N•B•S•10⁻¹/U according to a formula U=4.44•f•N•B•S•10⁻⁴ so as to design the pulse width adjustable type welding transformer; and adjusting pulse widths and welding current at different moments to complete welding process methods corresponding to different oscillograms.
2. An automotive sheet metal spatter-free dynamic heating adaptive resistance welding method (CN103394801A) includes the following implementation steps: calling different metal material heat balance factors by utilizing a welding transformer without a secondary rectifier and a pulse width adjustable AC inverter power supply to enable the factors to be always in a spatter-free ohmic heating and melting and cooling crystallization heat balance process in a nugget formation process; and controlling the nugget sizes by detecting a dynamic resistance change rate at two ends of the electrode.
3. An resistance welding nugget quality control method (CN102107323A) includes the following implementation steps: connecting a three-phase power supply to a controller, rectifying through a current-limiting resistance rectifier diode and a full-wave half-control rectifying circuit, enabling a capacitor filter to convert alternating current into direct current through the control circuit,, inputting the direct current into an H bridge circuit composed of IGBT, and outputting positive and negative half-wave alternating current with alternate variations from the ends U and V according to a main control circuit and a procedure.

Through a contrast of technical features, in the patent literatures disclosed above, the patent literature 1 has innovations in aspects of multiple projection welding, precision welding, welding workpieces sensitive to a polar effect, and has higher efficiency, energy conservation and higher welding quality compared with other welding machines. Multiple functions in one machine are realized under the condition that types of the welding machines are not changed, thereby increasing efficiency of adjusting the welding machines. The patent literature 2 is to introduce a spatter-free heat balance factor t+t0, thereby effectively solving a spatter problem in the welding process and improving the welding quality. The patent literature 3 is to increase a welding parameter, that is, a nugget coefficient c, on the basis of original welding parameters, and a current output waveform in each welding and heating cycle can be accurately controlled by two independent parameters, so that a control manner of the welding current waveform is substantially changed, welding machine control difficulty is reduced in the welding process, a depth of the nugget is increased, spatter is reduced, sensitivity of the resistance welding machine to material change, power grid fluctuation and pressure change is reduced, and stable welding quality is easier to be obtained by adjusting the nugget coefficient c.

Therefore, the patent literatures disclosed above have great differences from invention purposes of the present application, and will not influence creativity and novelty of the present invention.

### SUMMARY

The present invention aims to overcome defects in the prior art and provide a direct-contact type AC trapezoidal wave aluminum resistance welding process method. According to the method, by controlling a current rising rate and outputting positive and negative alternative welding waveforms with adjustable frequencies, low voltages and high current on two sides of a welding electrode, the problems that electrode life on a positive electrode side is shorter than electrode life on a negative electrode side during aluminum alloy resistance welding and welding quality and nugget offset of a concentric electrode welding part cannot be detected by using nondestructive detection are fundamentally solved, so that the number of continuous welding spots of the electrode each time is increased by 2-5 times, and service life of the electrode is greatly prolonged.

The present invention solves technical problems through technical solutions as follows:
A direct-contact type alternating current (AC) trapezoidal wave aluminum resistance welding process method is provided. Involved aluminum alloy resistance welding equipment comprises an inverter controller, an AC transformer, a welding electrode, a pressurization mechanism and a cooling system. The method includes the following steps:
(1) installing the AC transformer on the resistance welding equipment, wherein a primary coil of the AC transformer is connected with output ends U and V of the inverter controller, and a secondary coil of the AC transformer is connected with the welding electrode and the pressurization mechanism of the resistance welding equipment through a copper conductor or an aluminum conductor;
(2) not installing a rectifier or silicon-controlled rectifier on the secondary coil of the used AC transformer, wherein the used inverter controller is an AC trapezoidal wave controller with an adjustable frequency and a controllable positive and negative half-wave current rising rate, wherein
   technical parameters are as follows:
   parameters of the AC transformer: an output peak current of 32KA-70KA and a voltage of 10-30V;
   parameters of the inverter controller: an output current of 800-4800A, a frequency of 30-80Hz, a duty ratio of 20-100%, and a welding cycle number of 1-20; and
(3) enabling a three-phase power supply to pass through a current-limiting resistor R1, rectifier diodes D1 and D, a silicon-controlled rectifier (SCR) and a filter capacitor C by the inverter controller, and converting alternating current into direct current; and inputting the direct current into an H bridge circuit composed of insulated gate bipolar translators (IGBT), outputting an alternating voltage to the AC transformer with an adjustable primary frequency, an adjustable voltage and a controllable current rising rate from the ends U and V under control of a control circuit, and generating the needed AC trapezoidal wave welding current on a secondary induction coil for welding.

Further, the AC trapezoidal wave welding current includes the following parameters:
a duty ratio at a current rising phase is 95-100%;
a frequency is 25-80HZ;
a peak current is 32-70kiloampere; and
a welding cycle number is 1-20

Further, welding parameters of the aluminum alloy resistance welding equipment are as follows:
a welding pressure is p;
a turns ratio of the transformer N2/N1 is equal to (1:50) to (1:15);
a duty ratio in 0-3 cycles in preheating section detection time is 10-50%; and
a duty ratio in 0-100 cycles in automatic processing time is 20-80%

The present invention has the following advantages and beneficial effects:
1. An AC trapezoidal wave inverter controller capable of controlling a positive and negative half-wave current rising rate and an AC transformer (no rectifier or silicon-controlled rectifier on a secondary coil of the transformer) with an output voltage of 10-30V, a peak current of 32-70 kiloampere and a frequency of 25-80Hz are designed in the present invention. The inverter controller and the transformer are connected by means of a conductor, a welding electrode, a pressurization mechanism and a cooling system to form resistance welding equipment (a portable welding machine or a stationary welding machine) to enable the equipment to output positive and negative alternating trapezoidal wave current on two sides of the electrode when a workpiece is pressurized and welded and to perform welding according to a specified duty ratio, welding current, frequencies, welding cycle number and welding pressure, thereby fundamentally solving the problems that electrode wear on a positive electrode side is greater than electrode wear on a negative electrode side during direct current aluminum welding and welding quality of a concentric electrode welding part cannot be detected by using nondestructive detection, and greatly improving service life and welding quality of the electrode. Practice proves that the method has the advantages that 50-150 welding spots can be welded while grinding the electrode once each time, the service life of the electrode is prolonged by 2-5 times, production efficiency and welding quality are greatly improved, and production cost is reduced, thereby realizing a qualitative leap in aluminum and aluminum alloy resistance welding processes.
2. The present invention is different from traditional aluminum resistance welding process methods of using a direct current power supply or using both of the direct current power supply and a concentric electrode, solves problems from a power property angle, and has the advantages of long electrode life, low welding cost, high welding quality, high production efficiency, no auxiliary equipment, low transformer fault ratio and the like.

### BRIEF DESCRIPTION OF DRAWINGS

Fig. 1 is a schematic diagram of an AC transformer in the present invention;
Fig. 2 is a schematic circuit diagram of an inverter controller in the present invention;
Fig. 3 is a welding current oscillogram in the present invention;
Fig. 4 is a structural diagram of a stationary welding machine in the present invention; and
Fig. 5 is a structural diagram of a portable welding machine in the present invention.

### DETAILED DESCRIPTION

Embodiments of the present invention are further described below in detail in combination with drawings. It should be indicated that the present embodiment is descriptive instead of limited, and shall not be used for defining the protection scope of the present invention.

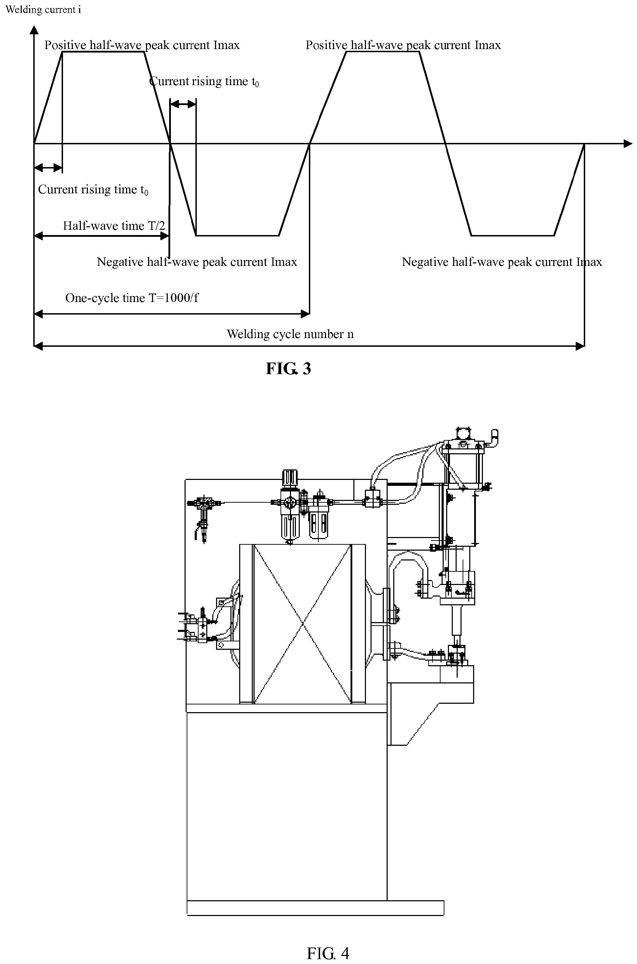

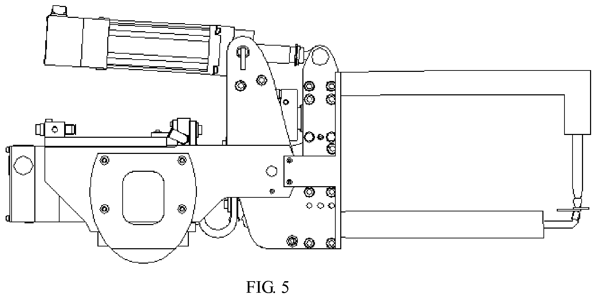

The present invention relates to a direct-contact type AC trapezoidal wave aluminum resistance welding process method. An AC trapezoidal wave inverter controller capable of controlling a positive and negative half-wave current rising rate, and an AC transformer (no rectifier or silicon-controlled rectifier on a secondary coil of the transformer) with an output voltage of 10-30V, a peak current of 32-70 kiloampere and a frequency of 25-80Hz are included. The inverter controller and the AC transformer are connected by means of a conductor, a welding electrode, a pressurization mechanism and a cooling system to form resistance welding equipment, shown as a portable welding machine in Fig. 5 and a stationary welding machine in Fig. 4, to enable the equipment to output positive and negative alternating trapezoidal wave current on two sides of the electrode when a workpiece is pressurized and welded and to perform welding according to a specified duty ratio, welding current, frequencies, welding cycle number and welding pressure.

The present invention has an innovation point of controlling a rising rate of the positive and negative alternating trapezoidal wave current on the two sides of the electrode by adjusting the duty ratio. The AC transformer of a specific frequency, a specific current and a specific voltage is selected to use.

The present invention only relates to variations of the inverter controller and the AC transformer, while overall structures of the portable welding machine and the stationary welding machine are basically not changed. Therefore, only graphical representations of the portable welding machine and the stationary welding machine are given, but the structures are not described.

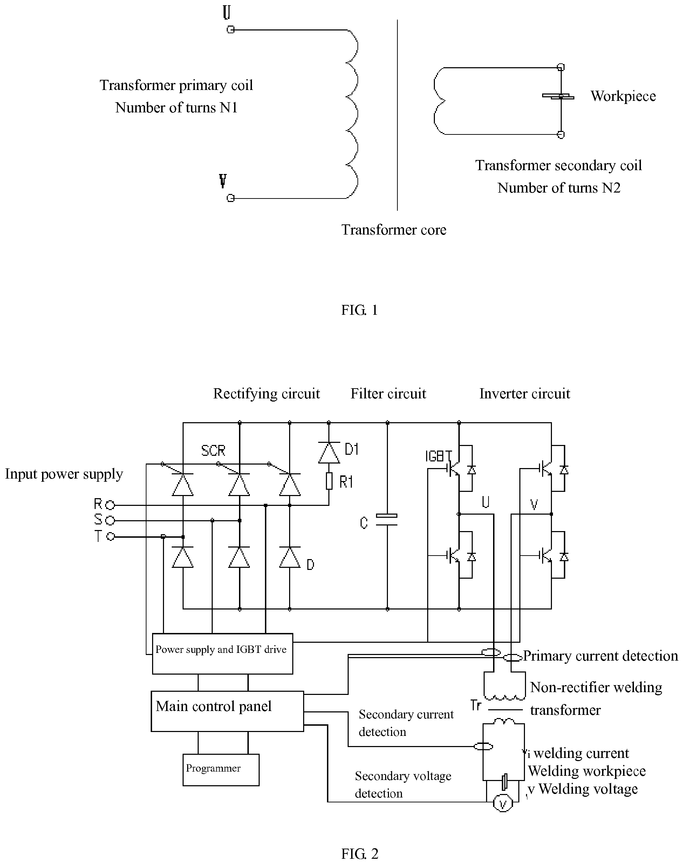

The AC transformer in the present invention is composed of a primary coil, a secondary coil and an iron core, shown in Fig. 1.

A schematic diagram of the inverter circuit of the inverter controller in the present invention is shown in Fig. 2, and operating principles are as follows:
(1) an input power supply: three-phase 110V-440V;
(2) a full-wave half-control bridge rectifying circuit is composed of a silicon controlled rectifier and a rectifier diode, has a current of 200-2000A and a withstand voltage of 1200-2000V, and has a function of converting alternating current into pulsating direct current;
(3) a filter circuit is composed of a plurality of capacitors with a withstand voltage of 400-900V and a capacity of 330-10000 microfarads connected in series and parallel, and has a function of converting a pulsating direct current voltage into a stable direct current voltage;
(4) an inverter circuit is an H bridge circuit composed of IGBT, has an IGBT withstand voltage of 1200-2000V and a current of 200-2000A and has functions of enabling direct current to output AC square waves with adjustable output voltages and variable frequencies from ends U and V through the IGBT according to a certain duty ratio and inducing alternating low-voltage AC trapezoidal waves for aluminum welding on a secondary coil of the transformer through a primary coil of the transformer;
(5) a power supply and IGBT drive circuit have functions of generating power supplies of +5V, ±15V and +24V for controlling the devices to work, generating protection signals for controlling the IGBT to turn on and off and IGBT fault and generating a trigger signal for controlling the silicon controlled rectifier to charge;
(6) a main control panel circuit is a program control circuit formed by taking a DSP (digital signal processor) as a core;
   an operational amplifier circuit is simulated to control welding current, welding time, current waveforms and input/output signals through a digital input/output control circuit;
(7) a primary (or secondary) current detector is composed of current transformers and achieves an aim of controlling high-precision output current by detecting amplitude and variable quantity of the output current and feeding back to a main control circuit; and
(8) a programmer is used to input welding data into a man-machine interface of the controller.

The direct-contact type AC trapezoidal wave aluminum resistance welding process method includes the following steps:
(1) installing the AC transformer on the resistance welding equipment, wherein the primary coil of the AC transformer is connected with output ends U and V of the inverter controller, and the secondary coil of the AC transformer is connected with the welding electrode and the pressurization mechanism of the resistance welding equipment through a copper conductor or an aluminum conductor;
(2) not installing a rectifier or silicon-controlled rectifier on the secondary coil of the used AC transformer, wherein the used inverter controller is an AC trapezoidal wave controller with an adjustable frequency and a controllable positive and negative half-wave current rising rate, wherein
   technical parameters are as follows:
   parameters of the AC transformer: an output peak current of 32KA-70KA and a voltage of 10-30V;
   parameters of the inverter controller: an output current of 800-4800A, a frequency of 25-80Hz, a duty ratio of 10-100%, and welding cycle number of 1-20 equivalent to 10-300ms; and
(3) enabling a three-phase power supply to pass through a current-limiting resistor R1, rectifier diodes D1 and D, a silicon-controlled rectifier (SCR) and a filter capacitor C by the inverter controller, and converting alternating current into direct current; and inputting the direct current into an H bridge circuit composed of insulated gate bipolar translators (IGBT), outputting an alternating voltage to the AC transformer with an adjustable primary frequency, an adjustable voltage and a controllable current rising rate from the ends U and V under control of a control circuit, and generating the needed AC trapezoidal wave welding current on a secondary induction coil for welding.

A welding waveform is shown in Fig. 3.

Parameters in the process method provided by the present invention are set as follows:
a welding pressure is p;
a turns ratio of the transformer is equal to N2/N1;
a duty ratio in 0-3 cycles in preheating section detection time is 10-50%; and
a duty ratio in 0-100 cycles in automatic processing time is 20-80%
welding parameters are as follows:
AC trapezoidal waves;
a duty ratio at a current rising phase of 95-100%;
a frequency of 25-80HZ;
a peak current of 32-70 kiloampere; and
a welding cycle number of 1-20 equivalent to 10-300ms.

The welding current waveform in Fig. 1 is used in the present invention:
1. The problems that a direct-current power supply resistance welding aluminum electrode is short in life, nuggets offset and the electrode is easier to be bonded can be solved by utilizing the AC trapezoidal waves, and principles can be clearly illustrated by aluminum and copper, a potential difference generated by aluminum-copper contact and an AC inverter power supply control manner.
2. A duty ratio of every half-wave current rising section of the AC trapezoidal waves is controlled to 95-100%, so that current rise time from zero to a peak current Imax=32KA-70KA is in a range of t₀=1-5ms, the welding waveform is close to a rectangle, and a necessary aluminum welding current value is reached in the shortest time. This is a first key point of aluminum welding; otherwise an aluminum nugget is not formed to cause welding failure due to insufficient current density and fast aluminum heat dissipation.
3. A power supply frequency is controlled to 25-80Hz, which is the second key point of the aluminum welding.

When the frequency is higher than 80Hz, the welding waveform is close to triangular waves, so that the welding current is low, welding heat is insufficient, and the welding fails.

When the frequency is lower than 25Hz, the welding waveform is close to rectangular waves, the welding current is high, and the welding may be successful; however, because a half-wave time T/2 is longer than (1000/25)/2=20ms, that is, positive half-waves in a cycle have longer time, heat generated on a positive polarity side is high according to a formula Q=0.24•I•U•t, and an electrode bonding tendency is increased, thereby influencing electrode life.

Technical advantages and outstanding effects of the present application are further verified below through three application examples.

### Application example 1:

Parameters with respect to 1.5mm+1.5mm aluminum alloy spot welding process:
a welding pressure P is equal to 4000N;
a turns ratio of the transformer N2/N1 is equal to 1:28;
a duty ratio at a rising phase is 95%;
a welding peak current Imax is equal to 38KA;
a welding frequency f is equal to 50Hz;
a welding cycle number n is 5; and
the electrode needs to be ground once when every 130 welding spots are continuously welded and the welding quality is met.

### Application example 2:

Parameters with respect to 3mm+3mm aluminum alloy spot welding process:
a welding pressure P is equal to 4000N;
a turns ratio of the transformer N2/N1 is equal to 1:40;
a duty ratio at the rising phase is 100%;
a welding peak current Imax is equal to 40KA;
a welding frequency f is equal to 40Hz;
a welding cycle number n is 12; and
the electrode needs to be ground once when every 65 welding spots are continuously welded and the welding quality is met.

### Application example 3:

Parameters with respect to 1.5mm+3mm+1.5 aluminum alloy spot welding process:
a welding pressure P is equal to 4000N;
a turns ratio of the transformer N2/N1 is equal to 1:40;
a duty ratio at the rising phase is 95%;
a welding peak current Imax is equal to 39KA;
a welding frequency f is equal to 45Hz;
a welding cycle number n is 8; and
the electrode needs to be ground once when the welding quality requirement is met by continuous welding of 100 times and the nugget sizes are consistent (direct-current welding nuggets are different in sizes).

The detailed illustration of the resistance welding process method by referring to the embodiments is descriptive but not limited. Therefore, changes and modifications should belong to the protection scope of the present invention on premise of not deviating from a general concept of the present invention.

The operating principles of the present invention are as follows:
The AC trapezoidal waves are formed between positive and negative copper electrodes by adjusting the duty ratio of the inverter circuit and the voltage of the welding transformer, and the current and frequencies of the trapezoidal waves are suitable for aluminum and aluminum alloy welding. The current, voltage, frequency and duty ratio ranges can be adjusted at any time according to aluminum alloy plates of different thicknesses. Because a large duty ratio of 95-100% is used at an initial half-wave section, the current rises extremely rapidly, and heat needed by welding is rapidly reached among the aluminums under dual functions of the frequency and high current. Due to positive and negative alternation, when heat on the positive electrode side just does not reach heat needed by infiltration from the aluminum to copper, a copper electrode is changed to an alternative negative electrode, so that a bonding phenomenon between the electrode and the aluminum alloy is avoided on both poles of the welding electrode, and quality problems such as bonding, penetrating and spattering and the like because of overheating on one side caused by the power supply property problem are avoided, thereby greatly prolonging the service life of the electrode and increasing production efficiency of the aluminum alloy resistance welding.

## Claims

1. direct-contact type alternating current (AC) trapezoidal wave aluminum resistance welding process method, involved aluminum alloy resistance welding equipment comprising an inverter controller, an AC transformer, a welding electrode, a pressurization mechanism and a cooling system, comprising the following steps:
(1) installing the AC transformer on the resistance welding equipment, wherein a primary coil of the AC transformer is connected with output ends U and V of the inverter controller, and a secondary coil of the AC transformer is connected with the welding electrode and the pressurization mechanism of the resistance welding equipment through a copper conductor or an aluminum conductor;
(2) not installing a rectifier or silicon-controlled rectifier on the secondary coil of the used AC transformer, wherein the used inverter controller is an AC trapezoidal wave controller with an adjustable frequency and a controllable positive and negative half-wave current rising rate, wherein,
technical parameters are as follows:
parameters of the AC transformer: an output peak current of 32KA-70KA and a voltage of 10-30V;
parameters of the inverter controller: an output current of 800-4800A, a frequency of 30-80Hz, a duty ratio of 20-100%, and welding cycle number of 1-20; and
(3) enabling a three-phase power supply to pass through a current-limiting resistor R1, rectifier diodes D1 and D, a silicon-controlled rectifier (SCR) and a filter capacitor C by the inverter controller, and converting alternating current into direct current; and inputting the direct current into an H bridge circuit composed of insulated gate bipolar translators (IGBT), outputting an alternating voltage to the AC transformer with an adjustable primary frequency, an adjustable voltage and a controllable current rising rate from the ends U and V under control of a control circuit, and generating the needed AC trapezoidal wave welding current on a secondary induction coil for welding.

2. The direct-contact type AC trapezoidal wave aluminum resistance welding process method according to claim 1, wherein the AC trapezoidal wave welding current comprises the following parameters:
a duty ratio at a current rising phase is 95-100%;
a frequency is 25-80HZ;
a peak current is 32-70kiloampere; and
a welding cycle number is 1-20.

3. The direct-contact type AC trapezoidal wave aluminum resistance welding process method according to claim 1, wherein welding parameters of the aluminum alloy resistance welding equipment are as follows:
a welding pressure is p;
a turns ratio of the transformer N2/N1 is equal to (1:50) to (1:15);
a duty ratio in 0-3 cycles in preheating section detection time is 10-50%; and
a duty ratio in 0-100 cycles in automatic processing time is 20-80%.
